# EUROPEAN PATENT APPLICATION

(11) **EP 4 080 271 A1**
(43) Date of publication of application: **26.10.2022**
(21) Application number: 21194748.6
(22) Date of filing: 03.09.2021
(51) Int. Cl.: G02C 7/10, B29D 11/00, G02B 1/04, G02C 7/04

(54) **OPTICAL MATERIAL, OPTICAL PRODUCT, AND MANUFACTURING METHOD THEREOF**

(30) Priority: 22.04.2021 US 202163177974 P; 04.06.2021 TW 110120371
(71) Applicant: Tianchen Innovative Materials Technology Co., Ltd, 300042 Hsinchu City (TW)
(72) Inventor: MAI, Yu-Shen, 300042 Hsinchu City (TW); KU, Kuan-Lin, 300042 Hsinchu City (TW); LEE, Ko-Sen, 300042 Hsinchu City (TW); WANGWONG, Tzu-Chu, 300042 Hsinchu City (TW)
(74) Representative: Carstens, Dirk Wilhelm

(57) **Abstract**

An optical material for making an optical product (100, 200, 300, 400, 500, 600) is provided. The optical material includes a light-resistant material undergone surface modification by titanium dioxide, so that the optical product (100, 200, 300, 400, 500, 600) is at least resistant to light having a wavelength between 280 nm and 380 nm. The optical product (100, 200, 300, 400, 500, 600) and a manufacturing method thereof are also provided.

## Description

### BACKGROUND

### Technical Field

The disclosure relates to an optical material, an optical product, and a manufacturing method thereof, particularly to an optical material capable of resisting at least light having a wavelength between 280 nm and 380 nm, an optical product, and a manufacturing method thereof.

### Description of Related Art

Generally speaking, natural light sources (such as sunlight) or light sources from other electronic devices (such as LED light sources of a computer or mobile phone screens) are likely to cause damage to human eyes, especially eye diseases that cause vision degradation such as cataracts and macular degeneration. Among these light sources, the wavelength bands that are more harmful to human eyes include long-wave ultraviolet light (UVA) and near-ultraviolet light (UVB). These two light wavelength bands cover the wavelength range of 280 nm to 380 nm. Furthermore, the ultraviolet light produced by optical products is known to bring chemical changes to the retina, causing damage to eyes. Therefore, to reduce the damage caused by ultraviolet light to the eyes, it has become an important subject for the present disclosure to provide users with better optical products.

### SUMMARY

The present disclosure provides an optical material, an optical product, and a manufacturing method thereof capable of improving the ability to protect eyes.

An optical material for manufacturing an optical product of the present disclosure includes a light-resistant material undergone surface modification by titanium dioxide, so that the optical product is at least resistant to light having a wavelength between 280 nm and 380 nm.

In an embodiment of the present disclosure, a surface of the light-resistant material mentioned above has an ethylenic functional group.

In an embodiment of the present disclosure, the ethylenic functional group mentioned above includes a propenyl group.

In an embodiment of the present disclosure, the light-resistant material mentioned above is grafted onto another light-resistant material.

An optical product includes a body and a light-resistant layer. The light-resistant layer is formed on the body. The light-resistant layer is formed of a light-resistant material undergone surface modification by titanium dioxide, so that the optical product is at least resistant to light having a wavelength between 280 nm and 380 nm.

In an embodiment of the present disclosure, the body and the light-resistant layer mentioned above are bonded by an ethylenic functional group.

In an embodiment of the present disclosure, the ethylenic functional group mentioned above includes a propenyl group.

In an embodiment of the present disclosure, a transmittance of the optical product mentioned above is between 0.1% and 50% for light having a wavelength between 280 nm and 380 nm.

In an embodiment of the present disclosure, the light-resistant layer mentioned above allows the optical product to further resist light having a wavelength between 380 nm and 500 nm.

In an embodiment of the present disclosure, a transmittance of the optical product mentioned above is less than 70% for light having a wavelength between 380 nm and 500 nm.

In an embodiment of the present disclosure, the light-resistant layer mentioned above is formed on a surface of the body.

In an embodiment of the present disclosure, the light-resistant layer mentioned above is formed within the body.

In an embodiment of the present disclosure, a distance exists between the light-resistant layer mentioned above and an edge of the body.

In an embodiment of the present disclosure, a material of the body and the light-resistant material mentioned above are not mutually doped.

A manufacturing method of an optical product at least includes the following steps: providing a body; and forming a light-resistant layer on the body, where the light-resistant layer is formed of a light-resistant material undergone surface modification by titanium dioxide, so that the optical product is at least resistant to light having a wavelength between 280 nm and 380 nm.

In an embodiment of the present disclosure, the light-resistant layer mentioned above is formed without doping.

In an embodiment of the present disclosure, the titanium dioxide mentioned above performs the surface modification by a condensation reaction.

In an embodiment of the present disclosure, forming the light-resistant layer further includes: providing a solution including a light-resistant material on the body; and generating an ethylenic functional group bond between the body and the light-resistant material through a curing process.

In an embodiment of the present disclosure, the solution mentioned above is provided by a spraying, dipping, coating, or transfer process.

In an embodiment of the present disclosure, the ethylenic functional group mentioned above includes a propenyl group.

Based on the above, the optical material of the present disclosure is introduced with titanium dioxide that has anti-ultraviolet light effect. In this way, the optical product made from the optical materials mentioned above may resist the ultraviolet wavelength range (280 nm to 380 nm) effectively, thereby reducing the damage caused by ultraviolet light to the eyes and improving the protection for the eyes.

To make the above features and advantages of the present disclosure more comprehensible, the following embodiments are described in detail in conjunction with the accompanying drawings.

### BRIEF DESCRIPTION OF THE DRAWINGS

FIG. 1A is a schematic top view of an optical product according to an embodiment of the disclosure.
FIG. 1B is a schematic cross-sectional view of an optical product according to an embodiment of the disclosure.
FIG. 1C is a diagram showing the relationship between transmittance and wavelength of an optical product according to an embodiment of the present disclosure.
FIG. 2 is a flowchart of an optical product according to an embodiment of the present disclosure.
FIG. 3A to FIG. 3B are schematic diagrams of a manufacturing method of an optical product according to an embodiment of the present disclosure.
FIGs. 4, 5, 6, 7, and 8 are schematic cross-sectional views of optical products according to some embodiments of the present disclosure.

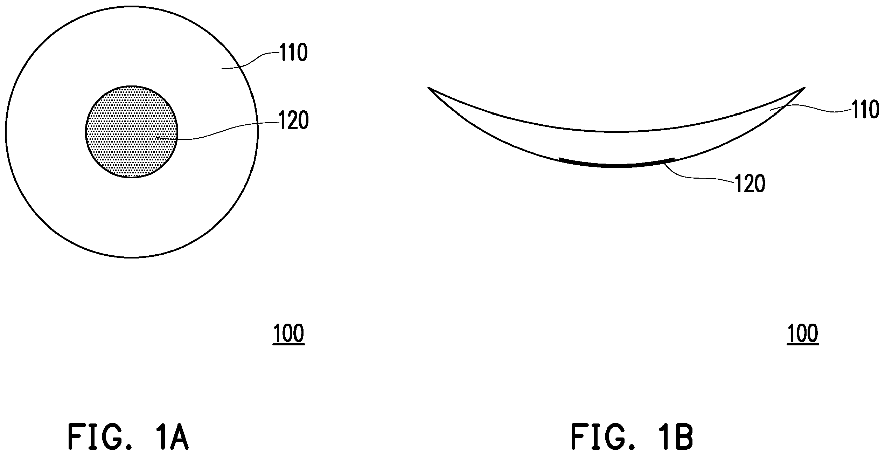

Note that, for the sake of clarity, components in FIGs. 1A, 1B, 3A, 3B, 4, 5, 6, 7, and 8 are not drawn according to actual scale.

### DESCRIPTION OF THE EMBODIMENTS

Hereinafter, reference numerals are added to describe the embodiments of the present disclosure in detail, and the description is accompanied by drawings. Where possible, unnecessary components are omitted for clarity.

The directional terms used herein (for example, up, down, right, left, front, back, top, bottom, etc.) are only used as a reference for the drawings and are not intended to imply absolute orientation.

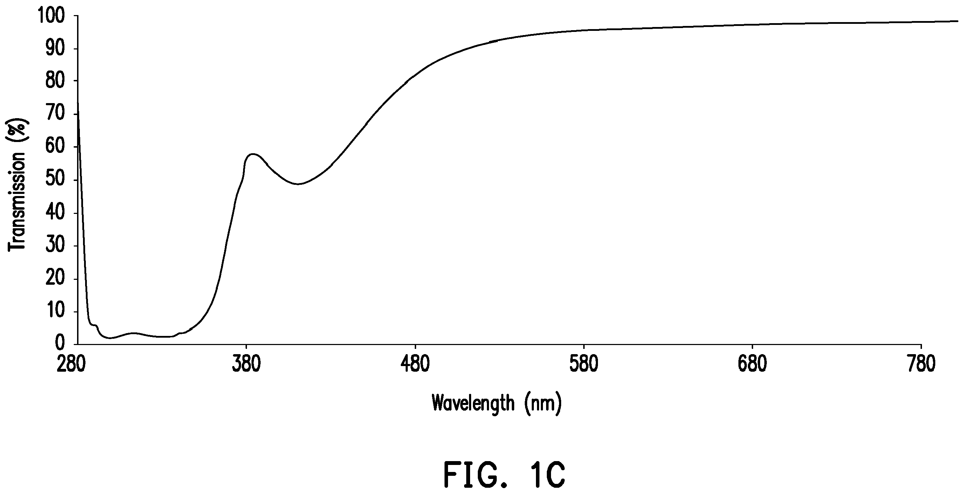

FIG. 1A is a schematic top view of an optical product according to an embodiment of the disclosure. FIG. 1B is a schematic cross-sectional view of an optical product according to an embodiment of the disclosure. FIG. 1C is a diagram showing the relationship between transmittance and wavelength of an optical product according to an embodiment of the present disclosure.

As shown in FIG. 1A to FIG. 1C, in this embodiment, an optical product 100 includes a body 110 and a light-resistant layer 120, wherein the light-resistant layer 120 is formed on the body 110, and the light-resistant layer 120 is formed of an optical material. Here, the optical product 100 of the present embodiment may be an optical product such as a contact lens, or as an optical product such as general external glasses, but the present disclosure is not limited thereto. In other embodiments, the optical product may be adapted into other types of lenses, screen protectors, or other optical products suitable.

Furthermore, the optical material may include a light-resistant material undergone surface modification by titanium dioxide (TiO₂). Therefore, the light-resistant layer 120 formed by the optical material mentioned above allows the optical product 100 to at least resist light having a wavelength between 280 nm and 380 nm. Accordingly, the optical material of this embodiment is introduced with titanium dioxide that has anti-ultraviolet light effect. In this way, the optical product 100 made from the optical material may resist the ultraviolet wavelength band (280 nm to 380 nm) effectively, thereby reducing the damage caused by ultraviolet light to the eyes and improving the protection for the eyes. Here, the titanium dioxide may be surface-modified on the light-resistant material according to a condensation reaction or any other process suitable. Note that the present disclosure does not impose restrictions on the surface modification, which can be selected based on actual design requirements.

In this embodiment, as shown in FIG. 1C, the optical product 100 has a transmittance between 0.1% and 50% for light having a wavelength between 280 nm and 380 nm, and thus the optical product 100 of this embodiment may resist the ultraviolet wavelength band (280 nm to 380 nm) effectively. The transmittance here may be the average transmittance for the light having a wavelength between 280 nm and 380 nm.

In some embodiments, the surface of the light-resistant material has ethylenic functional groups. For example, the ethylenic functional group includes a propenyl group. Therefore, the body 110 and the light-resistant layer 120 may be bonded through the mentioned ethylenic functional group to improve the bonding ability between the light-resistant layer 120 and the body 110, but the present disclosure is not limited thereto.

In some embodiments, the light-resistant material is grafted onto another light-resistant material. For example, another light-resistant material may be an anti-blue light material (which resists light having a wavelength between 380 nm and 500 nm) and the light-resistant material (one that is resistant to light having a wavelength between 280 nm and 380 nm) as mentioned is grafted onto the surface of anti-blue light material. In this way, the light-resistant layer 120 allows the optical product 100 to further resist light having a wavelength between 380 nm and 500 nm. And as shown in FIG. 1C, the transmittance of the optical product 100 is less than 70% (this may be the average transmittance for light having a wavelength between 380 nm and 500 nm) for light having a wavelength between 380 nm and 500 nm. Therefore, the optical product 100 not only resists the ultraviolet light band, but also resists the blue light band. In other words, the optical product 100 may have the functions of anti-blue light and anti-ultraviolet light at the same time, which further enhances the protection of the optical product 100 for the eyes. In addition, since anti-blue light materials are usually dark yellow, when they are applied and made into products they are generally not popular with the users. But the color of composite materials (the anti-blue light material and the light-resistant material mentioned above) added with titanium dioxide changes from dark yellow to white, which improves the acceptance of the material, but the present disclosure is not limited thereto.

In this embodiment, the light-resistant layer 120 may be formed on the surface of the body 110. For example, as shown in FIG. 1B, the light-resistant layer 120 may be formed on the curved surface of the body 110, and the light-resistant layer 120 may indent on the surface of the body 110. In other words, the light-resistant layer 120 may be disposed in the central area of the surface of the body 110, but the present disclosure is not limited thereto. The light-resistant layer 120 may also be disposed at any suitable position on the body 110 based on actual design requirements.

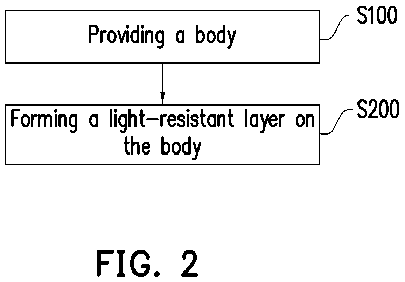

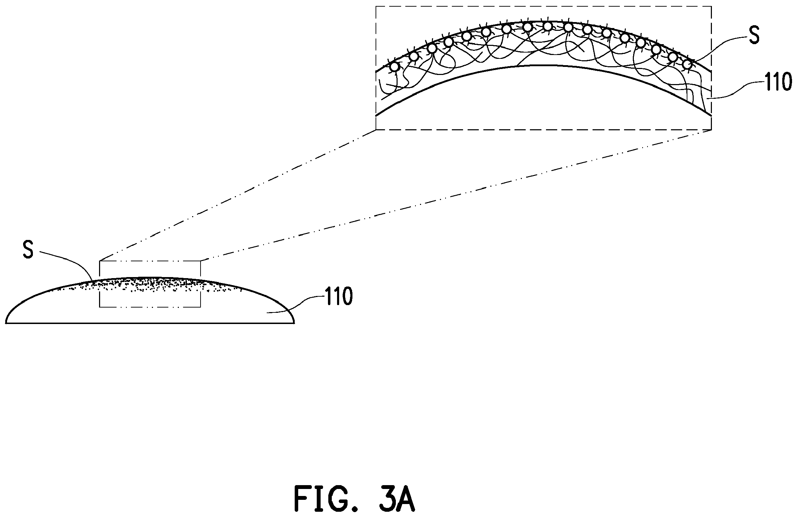

The main procedure of an optical product according to an embodiment of the present disclosure is described below along with the drawings. FIG. 2 is a flowchart of an optical product according to an embodiment of the present disclosure. FIG. 3A to FIG. 3B are schematic diagrams of a manufacturing method of an optical product according to an embodiment of the present disclosure. Note that the present disclosure is not limited to the following manufacturing methods. As long as the light-resistant layer 120 may be formed on the body 110, it is within the protection scope of the present disclosure.

In FIG. 2, a body 110 is provided (step S100). Next, a light-resistant layer 120 is formed on the body 110 (step S200), and the light-resistant layer 120 is formed of a light-resistant material undergone surface modification by titanium dioxide, so that the optical product 100 manufactured by the above method is at least resistant to light having a wavelength between 280 nm and 380 nm. Accordingly, the optical material of the present disclosure is introduced with titanium dioxide that has anti-ultraviolet light effect. In this way, the optical product made from the optical material mentioned above may resist the ultraviolet wavelength range (280 nm to 380 nm) effectively, thereby reducing the damage caused by ultraviolet light to the eyes and improving the protection for the eyes.

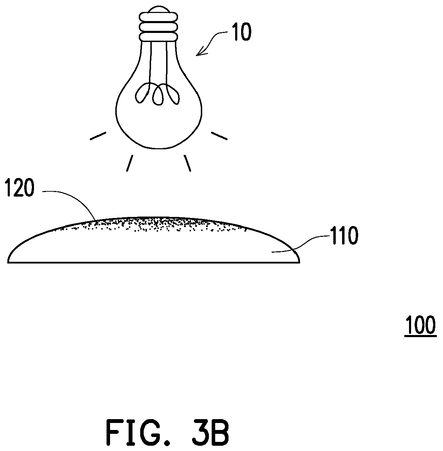

In FIG. 3A and FIG. 3B, due to the poor compatibility between the light-resistant material and the body using the doping process and the addition cost of the doping process is relatively high, the light-resistant layer 120 of this embodiment may also be formed without doping (for example, the material of the body 110 and the light-resistant material are not mutually doped), and it is formed, for example, as follows. First, as shown in FIG. 3A, a solution S including a light-resistant material is provided on the body 110, for example, by a spraying, dipping, coating, or transfer process. Then, as shown in FIG. 3B, a curing process (for example, by irradiation of a light-emitting device 10) is performed to generate an ethylenic functional group (such as an acrylic group) bonding between the body 110 and the light-resistant material. Therefore, the manufacturing method of this embodiment may further reduce the manufacturing cost of the optical product 100 and solve the problem of poor compatibility between the light-resistant material and the body in the doping process, but the present disclosure is not limited thereto.

It must be noted here that the following embodiments adopt the reference numbers and part of the content of the above embodiments. The same or similar reference numerals are used to represent the same or similar elements, and the description of the same technical content is omitted. For the description of the omitted parts, please refer to the foregoing embodiments, as the following embodiments do not repeat the same description.

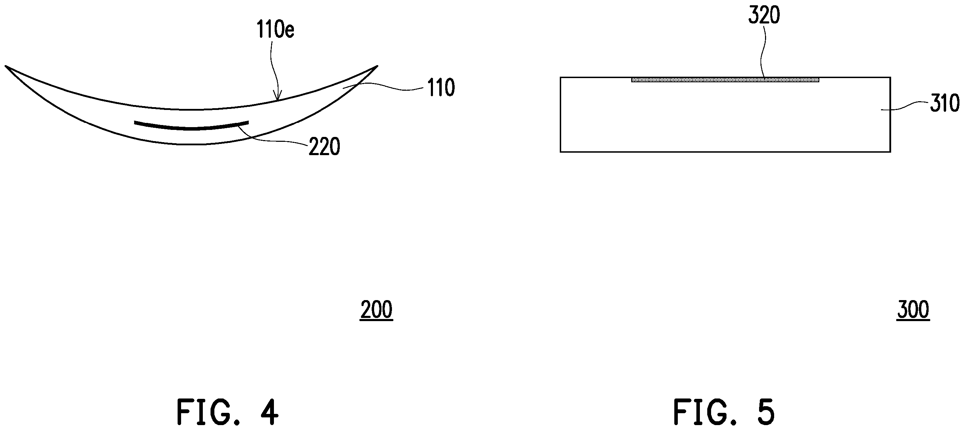

FIGs. 4, 5, 6, 7, and 8 are schematic cross-sectional views of optical products according to some embodiments of the present disclosure.

In FIG. 4, the difference between an optical product 200 of this embodiment and the optical product 100 of the foregoing embodiment is that a light-resistant layer 220 of the optical product 200 of this embodiment is formed within a body 110. In other words, there is a distance between the light-resistant layer 220 and an edge 110e of the body 110, so the light-resistant layer 220 is, for example, sandwiched in the body 110. In addition, in this embodiment, the light-resistant layer 220 may be located only in the central area of the body 110, but the present disclosure is not limited thereto. Here, the light-resistant layer 220 may be formed in the body 110 in any suitable way during the process of forming the body 110.

In FIG. 5, the difference between an optical product 300 in this embodiment and the optical product 100 in the foregoing embodiment is that a body 310 of the optical product 300 of this embodiment is not in the shape of a curved lens and may be in other suitable shapes according to the application of the optical product, and a light-resistant layer 320 may be formed on the central area of the body 310. For example, the optical product 300 of this embodiment may be a non-curved lens or a screen protector, but the disclosure is not limited thereto.

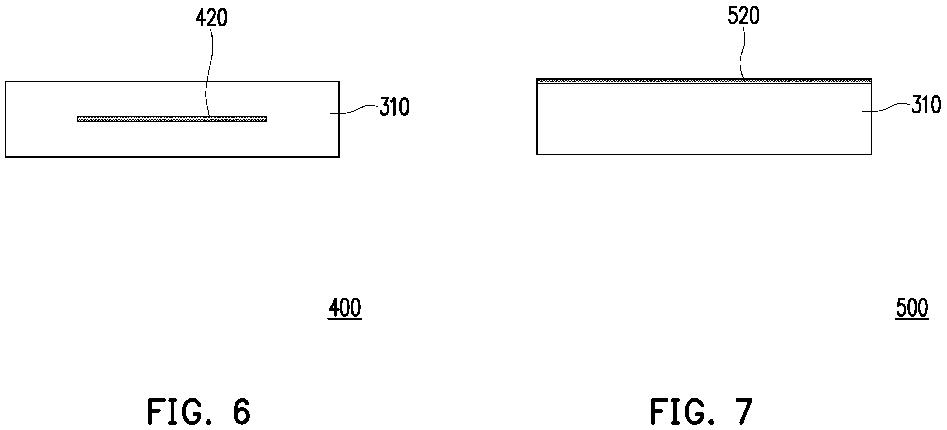

In FIG. 6, the difference between an optical product 400 in this embodiment and the optical product 300 in the foregoing embodiment is that a light-resistant layer 420 of the optical product 400 is formed within a body 310. In other words, the light-resistant layer 420 may be, for example, sandwiched within the body 310. In addition, in this embodiment, the light-resistant layer 420 may be located only in the central area of the body 310, but the present disclosure is not limited thereto.

In FIG. 7, the difference between an optical product 500 in this embodiment and the optical product 300 in the foregoing embodiment is that a light-resistant layer 520 of the optical product 500 is formed on the entire surface of the body 310. For example, the light-resistant layer 520 extends from one end of the surface of the body 310 to the other end, but the present disclosure is not limited thereto.

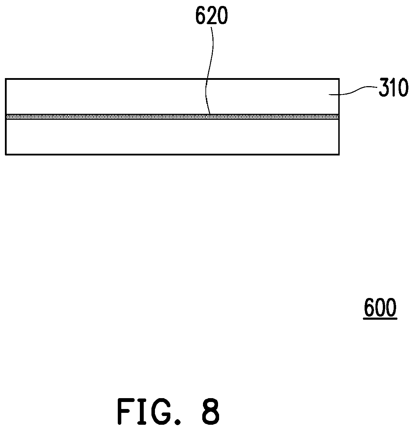

In FIG. 8, the difference between an optical product 600 of this embodiment and the optical product 500 of the foregoing embodiments is that a light-resistant layer 620 of the optical product 600 of this embodiment is formed within the entire area of the body 310. For example, the light-resistant layer 620 extends from one end to the other end inside the body 310, but the present disclosure is not limited thereto.

Note that the various aspects of optical products mentioned above can be mixed and matched with each other in an appropriate manner. For example, the configurations of FIG. 7 and FIG.8 can also be applied to curved lenses. As long as the optical product includes a light-resistant layer formed by a light-resistant material undergone surface modification by titanium dioxide, it falls within the protection range of the present disclosure.

In summary, the optical material of the present disclosure is introduced with titanium dioxide that has anti-ultraviolet light effect. In this way, the optical product made from the optical materials mentioned above may resist the ultraviolet wavelength range (280 nm to 380 nm) effectively, thereby reducing the damage caused by ultraviolet light to the eyes and improving the protection for the eyes.

Although the present disclosure has been disclosed in the above embodiments, they are not intended to limit the present disclosure. Anyone with ordinary knowledge in the relevant technical field can make some changes and modifications without departing from the spirit and scope of the present disclosure. The scope of protection of the present disclosure shall be subject to those defined by the claims attached.

## Claims

1. An optical material adapted to manufacture an optical product (100, 200, 300, 400, 500, 600), the optical material comprising:
a light-resistant material undergone surface modification by titanium dioxide, so that the optical product (100, 200, 300, 400, 500, 600) is at least resistant to light having a wavelength between 280 nm and 380 nm.

2. The optical material according to claim 1, wherein a surface of the light-resistant material comprises an ethylenic functional group.

3. The optical material according to claim 2, wherein the ethylenic functional group comprises a propenyl group.

4. The optical material according to claim 1, wherein the light-resistant material is grafted onto another light-resistant material.

5. An optical product (100, 200, 300, 400, 500, 600), comprising:
a body (110, 310); and
a light-resistant layer (120, 220, 320, 420, 520, 620) formed on the body (110, 310), wherein the light-resistant layer (120, 220, 320, 420, 520, 620) is formed of a light-resistant material undergone surface modification by titanium dioxide, so that the optical product (100, 200, 300, 400, 500, 600) is at least resistant to light having a wavelength between 280 nm and 380 nm.

6. The optical product (100, 200, 300, 400, 500, 600) according to claim 5, wherein the body (110, 310) and the light-resistant layer (120, 220, 320, 420, 520, 620) are bonded by an ethylenic functional group.

7. The optical product (100, 200, 300, 400, 500, 600) according to claim 6, wherein the ethylenic functional group comprises a propenyl group.

8. The optical product (100, 200, 300, 400, 500, 600) according to claim 5, wherein a transmittance of the optical product (100, 200, 300, 400, 500, 600) is between 0.1% and 50% for light having a wavelength between 280 nm and 380 nm.

9. The optical product (100, 200, 300, 400, 500, 600) according to claim 5, wherein the light-resistant layer (120, 220, 320, 420, 520, 620) allows the optical product (100, 200, 300, 400, 500, 600) to further resist light having a wavelength between 380 nm and 500 nm.

10. The optical product (100, 200, 300, 400, 500, 600) according to claim 9, wherein a transmittance of the optical product (100, 200, 300, 400, 500, 600) is less than 70% for light having a wavelength between 380 nm and 500 nm.

11. The optical product (100, 200, 300, 400, 500, 600) according to claim 5, wherein the light-resistant layer (120, 220, 320, 420, 520, 620) is formed on a surface of the body (110, 310).

12. The optical product (100, 200, 300, 400, 500, 600) according to claim 5, wherein the light-resistant layer (120, 220, 320, 420, 520, 620) is formed within the body (110, 310).

13. The optical product (100, 200, 300, 400, 500, 600) according to claim 12, wherein a distance exists between the light-resistant layer (120, 220, 320, 420, 520, 620) and an edge (110e) of the body (110, 310).

14. The optical product (100, 200, 300, 400, 500, 600) according to claim 5, wherein a material of the body (110, 310) and the light-resistant material are not mutually doped.

15. A manufacturing method of an optical product (100, 200, 300, 400, 500, 600), comprising:
providing a body (110, 310); and
forming a light-resistant layer (120, 220, 320, 420, 520, 620) on the body (110, 310), wherein the light-resistant layer (120, 220, 320, 420, 520, 620) is formed of a light-resistant material undergone surface modification by titanium dioxide, so that the optical product (100, 200, 300, 400, 500, 600) is at least resistant to light having a wavelength between 280 nm and 380 nm.
